# EUROPEAN PATENT APPLICATION

(11) **EP 4 513 689 A1**
(43) Date of publication of application: **26.02.2025**
(21) Application number: 23193553.7
(22) Date of filing: 25.08.2023
(51) Int. Cl.: H01S 3/06, H01S 3/08, H01S 3/0941, H01S 3/081, H01S 3/16

(54) **OPTICAL SYSTEM FOR THE GENERATION OF LASER LIGHT**

(71) Applicant: MONTFORT Laser GmbH & Co KG, 6840 Götzis (AT)
(72) Inventor: Kopf, Daniel, 6840 Götzis (AT)
(74) Representative: Torggler & Hofmann Patentanwälte - Rankweil

(57) **Abstract**

An optical system for the generation of laser light, comprising:
an optical cavity (1),
a solid-state laser gain medium in the form of a slab (2), wherein
said slab (2) is arranged inside said optical cavity (1) such that within said slab (2) a laser mode (3) is running in a zig-zag configuration, said zig-zag configuration having at least one bounce region (4) on opposing surfaces (5) of said slab (2),
said slab (2) has a point-symmetry with respect to its centre-of-mass (6);

at least two pump light sources (7) for pumping said solid state laser gain medium, wherein
said at least two pump light sources (7) are arranged on opposing surfaces (5) of said slab (2) such that a light-emitting region (8) of each pump light source (7) is substantially restricted to one of the at least bounce regions (4),
said at least two pump light sources (7) are arranged point-symmetrical with respect to said centre-of-mass (6) of said slab (2).

## Description

### TECHNICAL FIELD

The invention is in the field of optical systems for the generation of laser light.

### BACKGROUND

Optical systems in the form of compact diode-pumped arrangements using so called zig-zag brewster slabs are well known. The laser mode enters said slab under Brewster's angle and, after two or four or more bounces in regions where there is total reflection, leaves said slab under Brewster's angle in a parallel and coaxial manner with respect to its entry. Usually, pump diodes are arranged on only one of the surfaces of the slab.

Optical system for the generation of laser light comprising an optical cavity and a solid-state laser gain medium in the form of a slab, wherein said slab is arranged inside said optical cavity such that within said slab a laser mode is running in a zig-zag configuration, said zig-zag configuration having at least one bounce region on opposing surfaces of said slab is known in the art (see, e. g., Figure 5 of "High-energy diode-pumped alexandrite amplifier development with applications in satellite-based lidar", Alexander T. Coney and Michael J. Damzen, Vol. 38, No.1 / January 2021 / Journal of the Optical Society of America B).

In the Coney et al. reference a sheet of gain across the width and length of the slab is envisioned (par. 2.A, line 3) resulting in reduced efficiency.

The arrangement of slab, pumping diodes and heat sinks is not point-symmetrical with respect to a centre-of-mass of said slab. The arrangement is not point-symmetric because on one of the small lateral surfaces there is a reflecting area (on the left side in Figure 5) and on the other of the small lateral surfaces there is the in-/out-coupling area. There will be a temperature gradient along these areas resulting in different thermic lensing effects for reflection and transmission. There will be thermic reactions after switch-on and depending on the pumping power.

For these reasons there will be a long time of transient behaviour and thermal stress in the slab.

The use of a laser mode having one bounce region is shown in "High-efficiency diode-pumped Nd:YVO4 slab laser", J. E. Bernard and A. J. Alcock, OPTICS LETTERS / Vol. 18, No. 12 /June 15, 1993.

A multi-pass diamond geometry of the laser mode is shown in "Versatile, efficient, diode-pumped miniature slab laser", J. Richards and A. McInnes, OPTICS LETTERS / Vol. 20, No.4 / February 15, 1995.

### SUMMARY OF INVENTION

It is an object of the invention to provide an optical system for the generation of laser light which has higher efficiency and a shorter transient behaviour with respect to the prior art.

Still other objects and advantages of the invention will in part be obvious and will in part be apparent from the specification and drawings.

One object of the disclosure relates to an optical system, comprising:
- an optical cavity
- a solid-state laser gain medium in the form of a slab having opposing surfaces, wherein
   ∘ said slab is arranged inside said optical cavity such that within said slab a laser mode is running in a zig-zag configuration, said zig-zag configuration having at least one bounce region on each of said opposing surfaces of said slab
   ∘ said slab has a point-symmetry with respect to its centre-of-mass (point-symmetry in 2D with respect to a plane along the length extension of said slab and in 3D)
- at least two pump light sources for pumping said solid state laser gain medium, wherein
   ∘ said at least two pump light sources are arranged on opposing surfaces of said slab such that a light-emitting region of each pump light source is substantially restricted to one of the at least one bounce regions
   ∘ said at least two pump light sources are arranged point-symmetrically with respect to said centre-of-mass of said slab

The advantage of arranging said at least two pump light sources point-symmetrically with respect to said centre-of-mass of said slab is that thermal lensing is not off-centre, but the thermal lens is arranged on the axis of the slab. This means a significant reduction of the "switching on" effect compared to the prior art. Such "switching effect" leads to a moving laser beam when the power of the optical system is switched on or changed.

When using a Q-switch, optical damage on and beam disturbance caused by said "switching on" effect will be avoided after switching on the laser or changing its power.

The transient behaviour of the optical system is shortened to about 1- 2 s instead of 10 - 15 s in the prior art.

In the optical system the laser mode does not fill the volume of the slab and pumping is done only in the bouncing regions which increases efficiency and decreases thermal load.

Because said at least two pump light sources are arranged on opposing surfaces of said slab such that a light-emitting region of each pump light source is substantially restricted to one of the at least bounce regions there is no lost pump light.

In summary, the optical system has the advantages of "brute-force-pumping" without the disadvantage of a moving laser beam whenever the power is changed.

Preferred embodiments of the invention are described in dependent claims.

### DESCRIPTION OF EMBODIMENTS

In some embodiments said optical cavity is an unstable resonator, preferably with a large transverse diameter of the fundamental cavity mode enabling high pulse energy without the danger of optical damage. Said optical cavity can include a gradient reflectivity mirror (GRM) which, by way of example, for an optical system generating laser light with a pulse energy of 100 mJ, can have wm = 1,6 mm and a central reflectivity of about 40 %. The elements of the optical resonator can be chosen such that this results in a magnification of about 1, 5 - 2.

In some embodiments said light-emitting region of each pump light source has a spatial extension which is equal to or smaller than a spatial extension of the corresponding bounce region. By way of example, pump light sources having dimensions of 10 mm x 1 mm or 5 mm x 1 mm can be used.

In some embodiments said slab is made of Nd:YAG.

In some embodiments said slab is provided with two heat sinks attached to opposing surfaces of said slab such that said heat sinks allow point-symmetrical removal of heat with respect to said centre-of-mass of said slab.

In some embodiments said heat sink is a plate, preferably one of the group of a plate made of sapphire and a plate made of Nd:YAG. By way of example, said plate has a thickness of about 2 mm. By way of example, said plate can be attached to a surface of the slab using an optical glue. By way of example, said plate can be thermically connected to the surface using a metallic submount, e. g., using a foil made of Indium and clamping means.

It can be ensured that said heat sink and said means for connecting such heat sink to said surface of the slab have matched or similar thermal expansion coefficients.

In some embodiments each of said at least two pump light sources is arranged with a distance to one of the opposing surfaces which is chosen such that a pumping spot corresponds to a spot size of said laser mode in each corresponding bounce region. By way of example, for an optical system generating laser light with a pulse energy of 100 mJ such distance can be 3 mm.

In some embodiments said optical system is configured to emit pulsed laser radiation.

In some embodiments said optical system is actively Q-switched, e. g., using an electro-optical crystal such as RTP, BBO or KD*P.

In some embodiments said optical system is passively Q-switched, e. g., using a saturable absorber such as Cr4+:YAG.

In some embodiments
said slab is arranged inside said optical cavity such that said laser mode has at least two bounce regions on each of said opposing surfaces of said slab,
at least four pump light sources are arranged on opposing surfaces of said slab such that there are at least two pump light sources on each of said opposing surfaces and a light-emitting region of each pump light source is substantially restricted to one of the at least two bounce regions on each of said opposing surfaces,
said at least four pump light sources are arranged point-symmetrically at least in 2D in a centre plane comprising the centre-of-mass of said slab, and preferably in 3D, with respect to said centre-of-mass of said slab.

In some embodiments each of said at least two pump light sources is configured to emit a quasi cw pump power of about 2.000 W.

In some embodiments said optical system comprises a frequency doubler, by way of example such that the resulting laser light has a wavelength of 532 nm. It is then possible, using an optical parametric oscillator, to generate pulses in a range of wavelength of about 660 nm - 1300 nm. Such pulses can be used for photoacoustic imaging which is used, e. g., in medical applications.

In some embodiments at least one of said at least two pump light sources is formed by a pump diode.

In some embodiments at least one of said at least two pump light sources is formed by a light guide, e. g. in the form of a light guiding rod, which is coupled to at least one pump diode, or by an optical system imaging the laser diode light. In these embodiments it is possible to couple one pump diode to more than one light guide such that one pump diode can generate more than one pump light source. This reduces the number of pump diodes which are needed, reduces the amount of wiring and simplifies electronic control of said pump light sources.

### First example of an optical system:

| | |
|---|---|
| Pulse energy: | 100 120 mJ, max. 200 mJ |
| Number of diodes: | Two |
| Distance of diodes from slab: | 3 mm |
| Length of pump pulses: | 250 µs |
| Pump power per pump diode: | 2000 W |
| Resulting pump energy: | 500 mJ per pump diode |
| GRM: | wm = 1,6 mm and a central reflectivity of about 40 % |
| Magnification: | 1,5-2 |
| Linear length of Cavity: | 160 mm |
| Pulse length: | 4 ns |
| Pulse repetition rate: | 25 Hz |
| Peak power: | 30 MW |
| Thickness of slab: | 7 mm |
| Thickness of plate: | 2 mm |
| Length of pump diode: | 10 mm |

### Second example of an optical system:

| | |
|---|---|
| Pulse energy: | 10 - 30 mJ |
| Number of diodes: | Two |
| Distance of diodes from slab: | 1 mm |
| Length of pump pulses: | 250-400 µs |
| Pump power: | 250 W |
| Resulting pump energy: | 62,5 mJ per pump diode |
| GRM: | wm = 1,6 mm and a central reflectivity of about 40 % |
| Magnification: | 1,5 - 2 |
| Linear length of Cavity: | 160 mm |
| Pulse length: | 4 ns |
| Pulse repetition rate: | 50 -100 Hz |
| Peak power: | 3 MW |
| Thickness of slab: | 2,5 - 4 mm |
| Thickness of plate: | 1 mm |
| Length of pump diode: | 5 mm |

### BRIEF DESCRIPTION OF DRAWINGS

Embodiments of the invention are discussed making use of the enclosed figures.
Figure 1 shows a first embodiment of the optical system.
Figure 2 shows a second embodiment of the optical system.

### DETAILED DESCRIPTION OF DRAWINGS

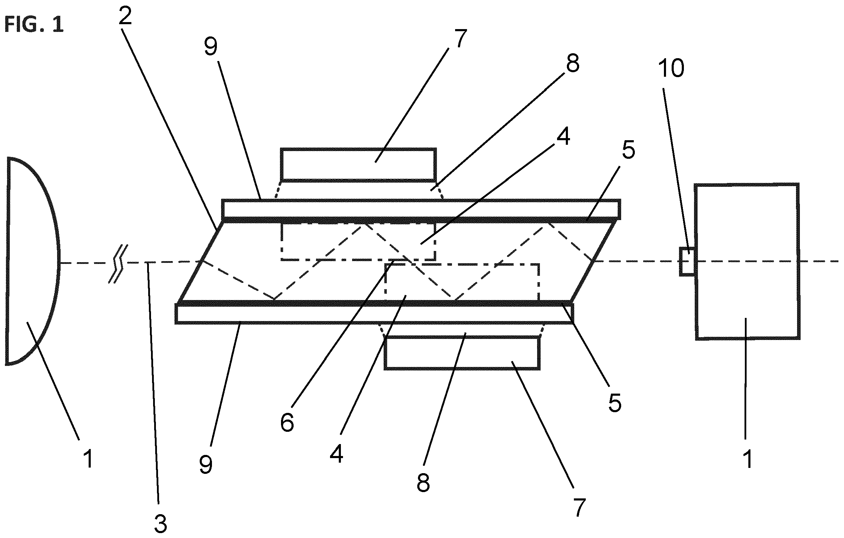

In Figure 1, a first embodiment of the optical system is shown.

In this embodiment comprises an optical cavity 1, which is an unstable resonator, and a solid-state laser gain medium in the form of a slab 2, wherein said slab 2 is arranged inside said optical cavity 1 such that within said slab 2 a laser mode 3 is running in a zig-zag configuration. Inside the optical cavity 1 there is a Q-switch 10.

In the embodiment of Figure 1 said zig-zag configuration has two bounce regions 4 on each of the opposing surfaces 5 of said slab 2.

As can be seen, said slab 2 has a point-symmetry with respect to its centre-of-mass 6.

In this embodiment there are two pump light sources 7 for pumping said solid state laser gain medium, wherein said two pump light sources 7 are arranged on opposing surfaces 5 of said slab 2 such that a light-emitting region 8 of each pump light source 7 is substantially restricted to one of the four bounce regions 4.

In this embodiment each of said two pump light sources 7 is arranged with a distance to one of the opposing surfaces 5 which is chosen such that a pumping spot corresponds to a spot size of said laser mode 3 in each corresponding bounce region 4.

It can be seen that said two pump light sources 7 are arranged point-symmetrically with respect to said centre-of-mass 6 of said slab 2.

Each of the opposing surfaces 5 is provided with a heat sink 9 in the form of a plate which is attached to the surface 5 and said heat sinks 9 are arranged such that point-symmetrical removal of heat with respect to said centre-of-mass 6 of said slab 2 is possible.

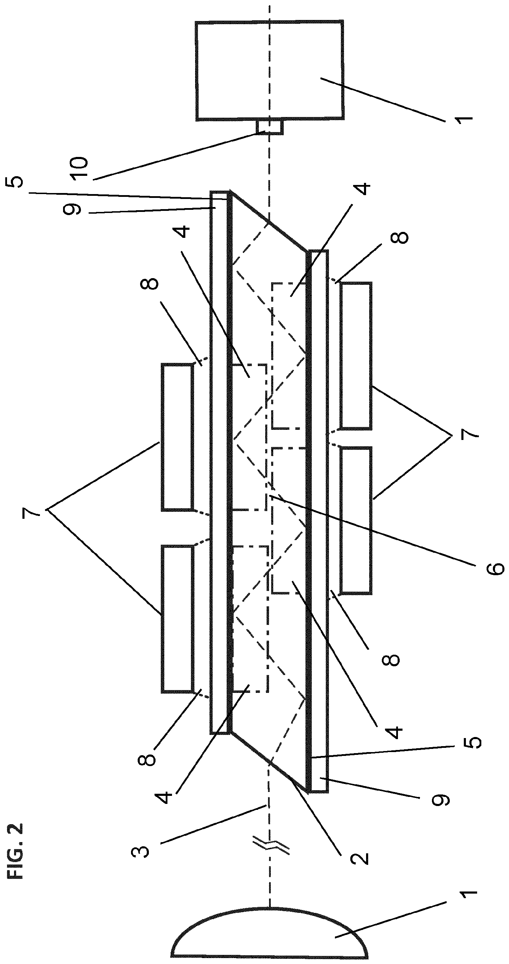

In Figure 2, a second embodiment of an optical system is shown.

The only difference with respect to the first embodiment shown in Figure 1 is that said slab 2 has a longer extension such that said laser mode 3 has three bounce regions 4 on opposing surfaces 5 of said slab 2 (so there are six bounce regions 4 in total) and there are four pump light sources 7 arranged on opposing surfaces 5 of said slab 2 such that there are two pump light sources 7 on each of said opposing surfaces 5 and a light-emitting region 8 of each pump light source 7 is substantially restricted to one of the six bounce regions 4.

All other details are the same as in Figure 1.

Like in Figure 1, said four pump light sources 7 are arranged point-symmetrical with respect to said centre-of-mass 6 of said slab 2.

As can be seen from the Figures, not all of said bounce regions 4 have to be provided with a corresponding pump light source 7.

### LIST OF REFERENCES

- 1: optical cavity
- 2: slab
- 3: laser mode
- 4: bounce region
- 5: surface of slab
- 6: centre-of-mass of slab
- 7: pump light source
- 8: light-emitting region of the pump light source
- 9: heat sink
- 10: Q-switch

## Claims

1. An optical system for the generation of laser light, comprising:
an optical cavity (1),
a solid-state laser gain medium in the form of a slab (2) having opposing surfaces (5), wherein
said slab (2) is arranged inside said optical cavity (1) such that within said slab (2) a laser mode (3) is running in a zig-zag configuration, said zig-zag configuration having at least one bounce region (4) on each of said opposing surfaces (5) of said slab (2),
said slab (2) has a point-symmetry, at least in 2D in a centre plane comprising the centre-of-mass (6) of said slab, and preferably in 3D;
at least two pump light sources (7) for pumping said solid state laser gain medium, wherein
said at least two pump light sources (7) are arranged on opposing surfaces (5) of said slab (2) such that a light-emitting region (8) of each pump light source (7) is substantially restricted to one of the at least one bounce regions (4),
said at least two pump light sources (7) are arranged point-symmetrically at least in 2D in a centre plane comprising the centre-of-mass (6) of said slab, and preferably in 3D, with respect to said centre-of-mass (6) of said slab (2).

2. The optical system according to the preceding claim wherein said optical cavity (1) is an unstable resonator, preferably with a large transverse diameter of the fundamental cavity mode enabling high pulse energy without the danger of optical damage.

3. The optical system according to one of the preceding claims wherein said light-emitting region (8) of each pump light source (7) has a spatial extension which is equal to or smaller than a spatial extension of the corresponding bounce region (4), both spatial extensions being measured along the surface (5) of said slab (2).

4. The optical system according to at least one of the preceding claims wherein said slab (2) is made of Nd:YAG.

5. The optical system according to at least one of the preceding claims wherein said slab (2) is provided with two heat sinks (9) attached to opposing surfaces (5) of said slab (2) such that said heat sinks (9) allow point-symmetrical removal of heat with respect to said centre-of-mass (6) of said slab (2) at least in 2D in a centre plane comprising the centre-of-mass (6) of said slab, and preferably in 3D.

6. The optical system according to the preceding claim wherein said at least two heat sinks (9) are in the form of a plate, preferably one of the group of a plate made of sapphire and a plate made of Nd:YAG.

7. The optical system according to at least one of the preceding claims wherein each of said at least two pump light sources (7) is arranged with a distance to one of said opposing surfaces (5) which is chosen such that a pumping spot corresponds to a spot size of said laser mode (3) in each corresponding bounce region (4).

8. The optical system according to at least one of the preceding claims wherein said optical system is configured to emit pulsed laser radiation.

9. The optical system according to at least one of the preceding claims wherein
said slab (2) is arranged inside said optical cavity (1) such that said laser mode (3) has at least two bounce regions (4) on each of said opposing surfaces (4) of said slab (2),
at least four pump light sources (7) are arranged on opposing surfaces (5) of said slab (2) such that there are at least two pump light sources (7) on each of said opposing surfaces (5) and a light-emitting region (8) of each pump light source (7) is substantially restricted to one of the at least two bounce regions (4) on each of said opposing surfaces (5),
said at least four pump light sources (7) are arranged point-symmetrically at least in 2D in a centre plane comprising the centre-of-mass (6) of said slab, and preferably in 3D, with respect to said centre-of-mass (6) of said slab (2).

10. The optical system according to at least one of the preceding claims wherein each of said at least two pump light sources (7) is configured to emit a quasi cw pump power of about 2.000 W.

11. The optical system according to at least one of the preceding claims wherein said optical system comprises a frequency doubler.

12. The optical system according to at least one of the preceding claims wherein said optical system comprises a Q-switch (10).

13. The optical system according to at least one of the preceding claims wherein at least one of said at least two pump light sources (7) is formed by a pump diode.

14. The optical system according to at least one of the preceding claims wherein at least one of said at least two pump light sources (7) is formed by a light guide which is coupled to at least one pump diode.
